# EUROPEAN PATENT APPLICATION

(11) **EP 4 550 084 A1**
(43) Date of publication of application: **07.05.2025**
(21) Application number: 24787398.7
(22) Date of filing: 23.09.2024
(51) Int. Cl.: G06F 1/16, G06F 3/02, H01H 13/14, H01H 13/26

(54) **ELECTRONIC DEVICE INCLUDING KEY BUTTON**

(30) Priority: 22.09.2023 KR 20230126963; 23.10.2023 KR 20230142052
(71) Applicant: Samsung Electronics Co., Ltd., Suwon-si, Gyeonggi-do 16677 (KR)
(72) Inventor: LEE, Seungwoon, Suwon-si, Gyeonggi-do 16677 (KR)
(74) Representative: Gulde & Partner
(86) International application number: PCT/KR2024/014303
(87) International publication number: WO 2025/063784

(57) **Abstract**

According to various embodiments, an electronic device may include a housing including multiple pin members, a plate coupled to the housing and including multiple through holes through which the multiple pin members pass, respectively, and a wire member disposed to support at least a portion of each of the multiple pin members protruding from the through holes. The plate may be supported by the wire member.

## Description

### [Technical Field]

Embodiments of the disclosure relate to an electronic device that includes a key button.

### [Background Art]

Electronic devices are released with various functions and sizes according to user preferences, and may include a key button device including multiple key buttons as input means.Due to the use characteristic of such a key button device in which the key buttons should be hit with a certain load, an assembly structure and a fixing structure that take rigidity and/or support into consideration may be required when the key button device is fixed to a housing.

The above information may be presented as related art for the purpose of assisting in understanding the disclosure.No assertion or decision is made as to whether any of the above might be applicable as prior art with regard to the disclosure.

### [Disclosure of Invention]

### [Technical Problem]

An electronic device may include multiple key buttons arranged at predetermined intervals as input means.These key buttons may be arranged to be exposed to the outside from a housing and may be used to input data by being physically pressed by hitting.An electronic device including key buttons may be used by being communicatively connected to an external electronic device (e.g., a tablet PC or a laptop PC).The electronic device including the key buttons may include a Bluetooth keyboard device that is wirelessly connected to a portable electronic device such as a tablet PC or a laptop PC, which does not have physical key input means or is inconvenient to use physical key input means.The electronic device including the key buttons may include a keyboard device used as data input components for a desktop PC.

The multiple key buttons may be arranged to be at least partially exposed from the inside of the housing to the outside through multiple openings provided in the housing. For example, the multiple key buttons may be assembled by arranging the key buttons on a plate (e.g., a key button plate or a keyboard module) and fixing the plate to the housing.In this case, the plate is fixed to the housing through fastening members such as multiple screws and/or rivets around each of the multiple key buttons, thereby protecting against deformation or damage caused by hitting each key button.

However, the multiple screws and/or rivets which should be placed around each of the multiple key buttons may increase work time when assembling or maintaining the electronic device, which may cause a decrease in productivity. For example, rivets used as fastening members make disassembly difficult during maintenance, necessitating replacement of the entire key button assembly, which may increase maintenance costs.

### [Solution to Problem]

Various embodiments of the disclosure may provide an electronic device including a key button with an easy assembly structure.

Various embodiments may provide an electronic device including a key button that is advantageous for maintenance and is capable of helping improve productivity.

Various embodiments may provide an electronic device including a key button that is capable of helping improve the operational reliability of the electronic device by providing a stable support structure.

However, the problems to be solved in the disclosure are not limited to the above-mentioned problems, and may be variously expanded without departing from the spirit and scope of the disclosure.

According to various embodiments, an electronic device includes a housing including multiple protruding pin members, a plate coupled to the housing and including multiple through holes through which the multiple pin members pass, respectively, and a wire member disposed to support at least a portion of each of the multiple pin members protruding from the through holes.The plate is supported by the wire member.

### [Advantageous Effects of Invention]

An electronic device according to exemplary embodiments of the disclosure includes an assembly structure in which, when assembling a plate (e.g., a keyboard module) including key buttons to a housing, the pin members penetrating from the housing penetrate the plate, and the plate is fixed to the housing so that the penetrated pin members are commonly supported by at least one wire member, which may help improve productivity and reduce manufacturing costs by reducing assembly time and number of components, and may help make repairs faster and reduce costs during maintenance.In addition, a uniform support force is provided via a support structure that seamlessly supports adjacent key buttons by a wire member, which may help improve the operational reliability of the electronic device.

Various other effects understood directly or indirectly through the disclosure may be provided.

Advantageous effects obtainable from the disclosure may not be limited to the above-mentioned effects, and other effects which are not mentioned may be clearly understood, through the following descriptions, by those skilled in the art to which the disclosure pertains.

### [Brief Description of Drawings]

With regard to the description of the drawings, the same or like reference signs may be used to designate the same or like elements.
FIG. 1 is a perspective view illustrating an electronic device according to various embodiments of the disclosure.
FIG. 2 is an exploded perspective view of the electronic device according to various embodiments of the disclosure.
FIG. 3A is a perspective view of a front surface cover according to various embodiments of the disclosure.
FIG. 3B is a perspective view of the front surface cover to which pin members are fixed according to various embodiments of the disclosure.
FIG. 3C is a view illustrating a process of fixing a pin member according to various embodiments of the disclosure.
FIGS. 3D to 3F are views each illustrating a state in which a plate is fixed to a housing according to various embodiments of the disclosure.
FIG. 3G is a view illustrating a state in which a wire member is applied to a plate according to various embodiments of the disclosure.
FIG. 3H is an enlarged view illustrating the area 3h of FIG. 3G according to various embodiments of the disclosure.
FIG. 3I is a view illustrating a state in which one end of a wire member is fixed in the area 3i of FIG. 3H according to various embodiments of the disclosure.
FIG. 3J is a partial cross-sectional view of the electronic device according to various embodiments of the disclosure taken along line 3j-3j in FIG. 3H.
FIG. 3K is a partial cross-sectional view of the electronic device according to various embodiments of the disclosure taken along line 3k-3k in FIG. 3H.
FIG. 3L is a partial cross-sectional view of the electronic device according to various embodiments of the disclosure taken along line 3I-3I in FIG. 3H.
FIG. 3M is a partial cross-sectional view of an electronic device viewed along line 3m-3m of FIG. 3H according to various embodiments of the disclosure.
FIG. 4A is a perspective view of a tension maintaining structure according to various embodiments of the disclosure.
FIGS. 4B and 4C are views each illustrating a state in which the other end of a wire member is elastically coupled by the tension maintaining structure according to various embodiments of the disclosure.
FIGS. 5A and 5B are views each illustrating an arrangement structure of wire members according to various embodiments of the disclosure.
FIGS. 6A and 6B are views each illustrating a pin member support structure based on a wire member according to various embodiments of the disclosure.
FIGS. 7A and 7B are views each illustrating a tension maintaining structure according to various embodiments of the disclosure.
FIG. 8 is a perspective view of an electronic device including multiple key buttons according to various embodiments of the disclosure.
FIGS. 9A and 9B are views each illustrating an arrangement relationship between an electronic device and an external electronic device according to various embodiments of the disclosure.

### [Mode for the Invention]

Hereinafter, embodiments of the disclosure will be described in detail with reference to the drawings so that those skilled in the art to which the disclosure pertains can easily implement the disclosure. However, the disclosure may be implemented in various forms and is not limited to embodiments set forth herein.With regard to the description of the drawings, the same or like reference signs may be used to designate the same or like elements.Also, in the drawings and the relevant descriptions, description of well-known functions and configurations may be omitted for the sake of clarity and brevity.

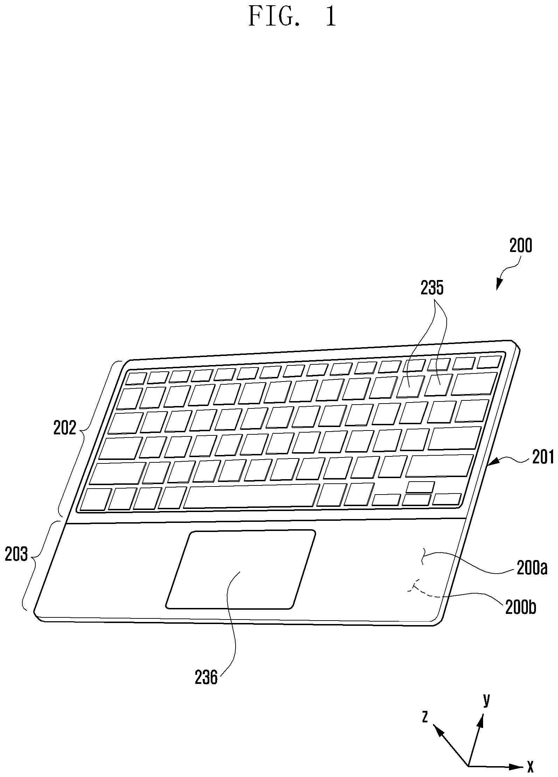

FIG. 1 is a perspective view illustrating an electronic device according to various embodiments of the disclosure.

Referring to FIG. 1, the electronic device 200 may include a housing 201 including a front surface 200a oriented in a first direction (e.g., the z-axis direction), a rear surface oriented in a second direction (e.g., the -z-axis direction) opposite to the front surface 200a, and input members disposed in the inner space of the housing 201 to be at least partially exposed to at least a portion of the front surface 200a.In an embodiment, the input members may include multiple key buttons disposed in a first area 202 (e.g., a button placement area) of the housing 201 to be at least partially exposed to the outside through the front surface 200a, and at least one key pad 236 disposed in a second area 203 (e.g., a key pad placement area) adjacent to the first area 202 to be at least partially exposed to the outside through the front surface 200a.In an embodiment, the multiple key buttons 235 may be disposed to be spaced apart from each other at a predetermined interval.The electronic device 200 may detect data input through the pressing force with which a user hits the key buttons 235.In an embodiment, the at least one key pad 236 may be disposed to be exposed on the front surface 200a of the housing 201 and to recognize a user's touch input and/or pressure. In an embodiment, the electronic device 200 may detect data input through touch input in which the user touches the key pad 236 in various ways.

According to various embodiments, the illustrated electronic device 200 may be used as data input means by being wirelessly and/or wiredly connected to an external electronic device (e.g., a tablet PC or a laptop PC).For example, the electronic device 200 may include a Bluetooth keyboard device that is wirelessly connected to an external electronic device.

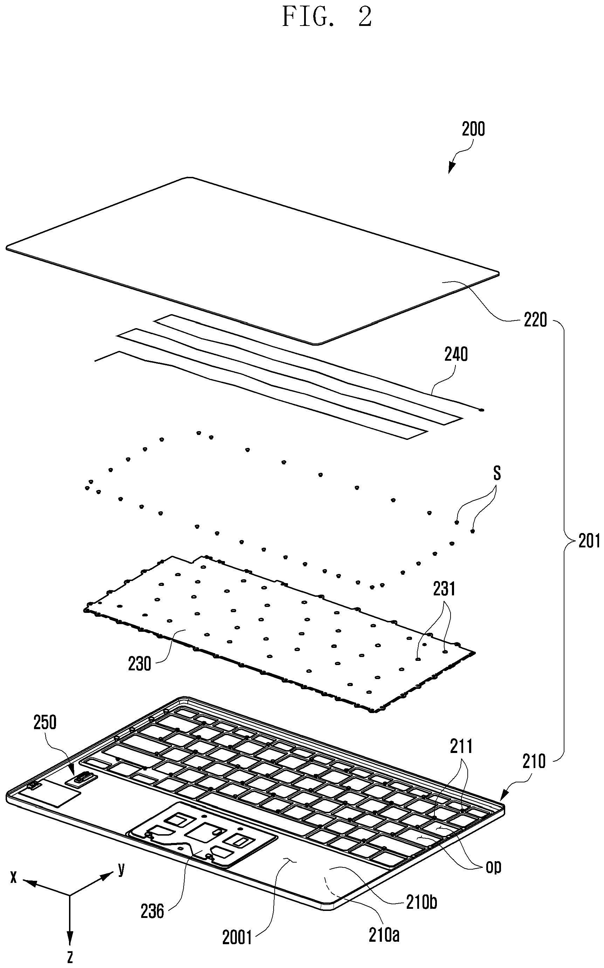

The electronic device 200 according to exemplary embodiments of the disclosure may include a wire member (e.g., the wire member 240 in FIG. 2) as a fixing structure that fixes a plate (e.g., the plate 230 in FIG. 2) (e.g., a key button plate or a keyboard module) on which multiple key buttons 235 are disposed, to the housing 201.In an embodiment, the wire member (e.g., the wire member 240 in FIG. 2) may help improve productivity by replacing multiple fastening members such as screws or rivets, thereby simplifying an assembly process and reducing manufacturing costs.

FIG. 2 is an exploded perspective view of the electronic device according to various embodiments of the disclosure.

Referring to FIG. 2, the electronic device 200 may include a front surface cover 210 (e.g., a first cover or a first plate), a rear surface cover 220 (e.g., a second cover or a second plate) coupled to the front surface cover 210, a plate 230 (e.g., a keyboard module) disposed in the inner between the front surface cover 210 and the rear surface cover 220, and including multiple key buttons (e.g., the key buttons 235 in FIG. 1) at least partially exposed to the outside of the electronic device 200 through the front surface cover 210, and a wire member 240 disposed in the inner space 2001 between the plate 230 and the rear surface cover 220 to support the pin members 211 (e.g., fixing pins) of the front surface cover 210 that are penetrated through the plate 230.In an embodiment, the electronic device 200 may include multiple fastening members S (e.g., screws) for fixing at least a portion of the plate 230 to the front surface cover 210.

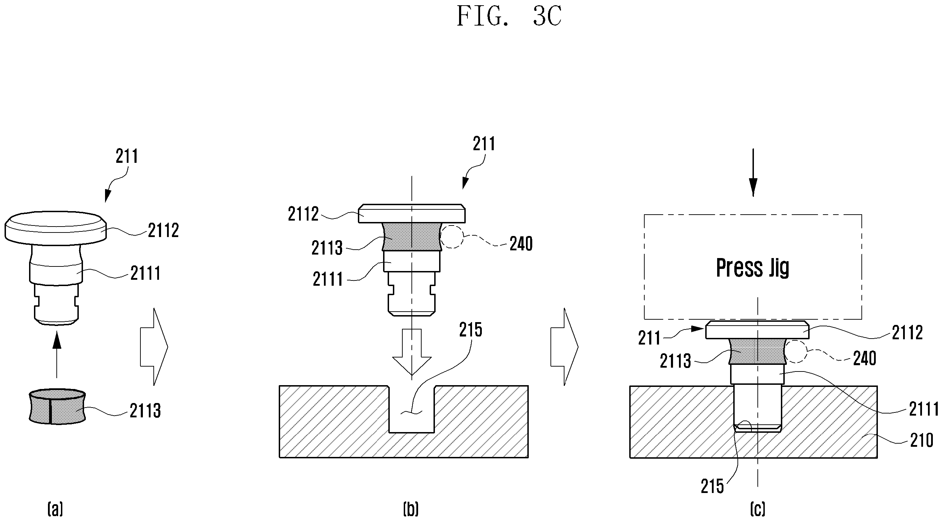

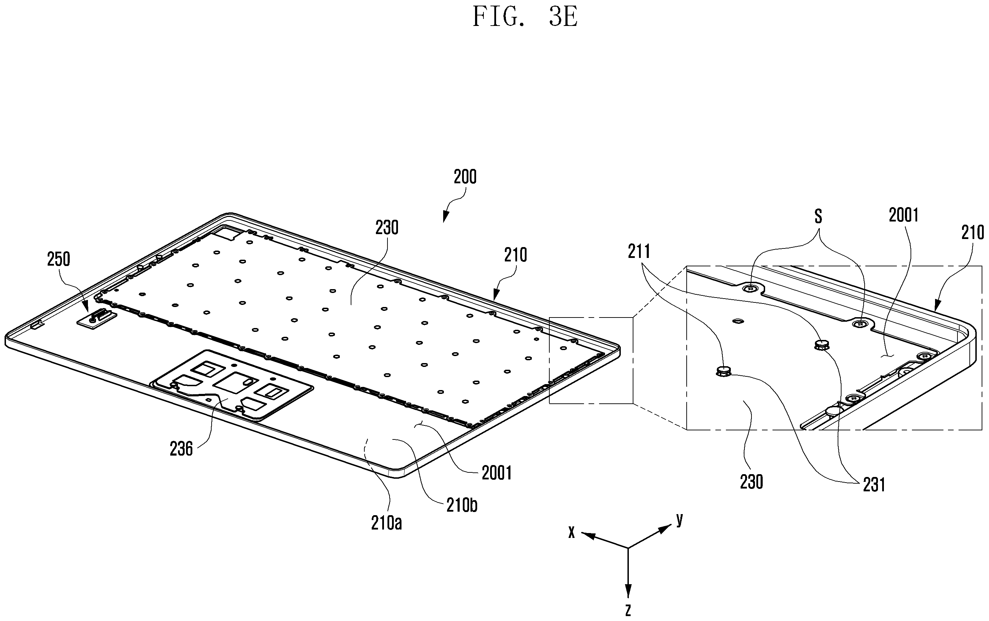

According to various embodiments, the front surface cover 210 may include a first surface 210a facing the front surface (e.g., the front surface 200a in FIG. 1) of the electronic device 200, and a second surface 210b oriented in the opposite direction to the first surface 210a (e.g., the front side 200a in FIG. 1) (e.g., the -z-axis direction).In an embodiment, the front surface cover 210 may include multiple openings OP disposed to accommodate multiple key buttons (e.g., the key buttons 235 in FIG. 1), respectively, which are disposed on the plate 230.In an embodiment, the front surface cover 210 may include the multiple pin members 211, each of which is fixed to the second surface 210b between adjacent ones of the multiple openings OP.In an embodiment, the multiple pin members 211 may be made of a metal material, and may be fixed by being pressed into fixing grooves (e.g., the fixing grooves 215 in FIG. 3C) formed in the second surface 210b of the front surface cover 210 by a press jig.In some embodiments, the multiple pin members 211 may be made of polymer (e.g., PC).In some embodiments, the multiple pin members 211 may be formed integrally with the front surface cover 210.In an embodiment, the front surface cover 210 and/or the rear surface cover 220 may be formed of a metal material or polymer.In some embodiments, the front surface cover 210 and/or the rear surface cover 220 may be formed to include both a metal material and a polymer through injection molding.

According to various embodiments, the plate 230 may include multiple through holes 231.In an embodiment, the multiple through holes 231 may be provided at corresponding positions to allow the multiple pin members 211 to pass therethrough, respectively, when the plate 230 is mounted on the second surface 210b of the front surface cover 210.In an embodiment, the plate 230 may include a board (e.g., a printed board assembly (PBA)) on which multiple key buttons (e.g., the key buttons 235 in FIG. 1) are disposed. In some embodiments, the plate 230 is a separate support plate that supports the board on which the key buttons (e.g., the key buttons 235 in FIG. 1) are disposed, and may be made of a metal material and/or a polymer material.

According to various embodiments, the wire member 240 may be disposed to support multiple pin members 211 protruding from the surface of the plate 230 after the plate 230 is mounted on the second surface 210b of the front surface cover 210.For example, after being fixed to the front surface cover 210 at one end, the wire member 240 may at least partially support the multiple pin members 211 protruding from the plate 230 from the plate 230, thereby reducing the deformation of the plate 230 caused by hitting the key buttons (e.g., the key buttons 235 in FIG. 1) or key input errors caused by partial separation of the plate 230 from the front surface cover 210.In an embodiment, the wire member 240 may include a non-elastic metal wire.In some embodiments, the wire member 240 may be made of a non-elastic carbon material, nylon material, fiber material, or heat-resistant fabric material.According to an embodiment, the multiple fastening members S may be disposed along the edge (e.g., the periphery) of the plate 230, and may assist in fixing the plate 230 by being fastened to the second surface 210b of the front surface cover 210 after penetrating the plate 230.

According to various embodiments, the electronic device 200 may include a tension maintaining structure 250 that is disposed on the second surface 210b and, in the state in which one end of the wire member 240 is fixed to the front surface cover 210, pulls tightly the other end of the wire member 240 to firmly support the multiple members 211.In an embodiment, the wire member 240 may support the multiple pin members 211 in a tight state without sagging through the tension maintaining structure 250.

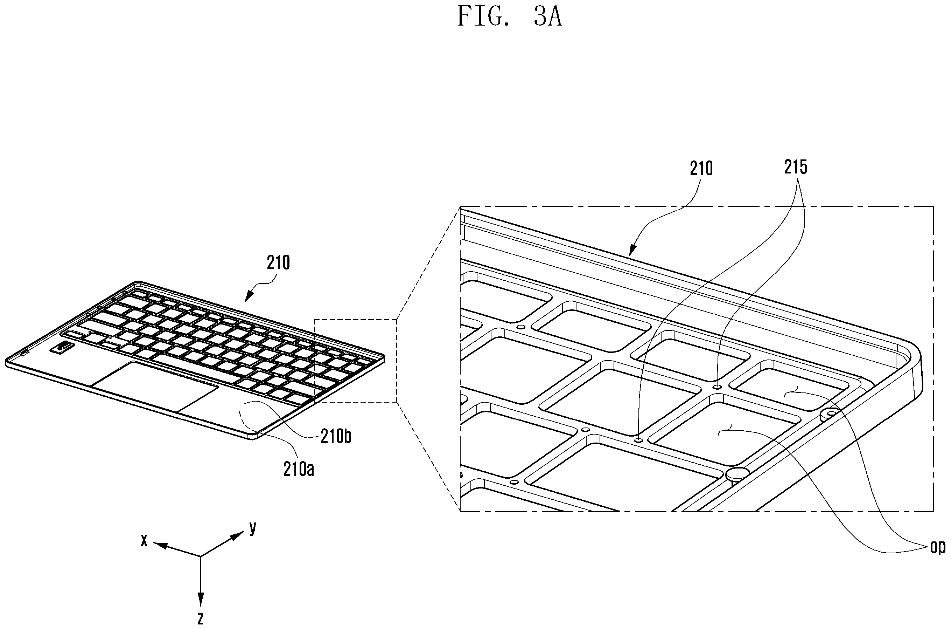

Hereinafter, an assembly process of the electronic device will be described through FIGS. 3A to 3M.

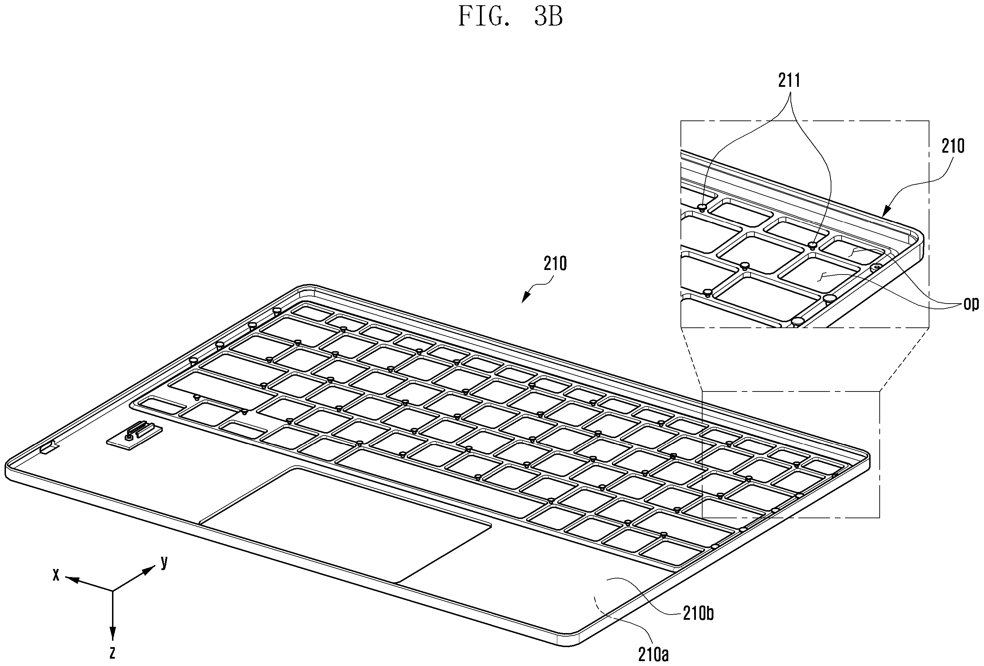

FIG. 3A is a perspective view of a front surface cover according to various embodiments of the disclosure.FIG. 3B is a perspective view of the front surface cover to which pin members are fixed according to various embodiments of the disclosure.FIG. 3C is a view illustrating a process of fixing a pin member according to various embodiments of the disclosure.

Referring to FIGS. 3A to 3C, the front surface cover 210 may include multiple openings OP penetrating it from the first surface 210a to the second surface 210b.In an embodiment, the multiple openings OP may be arranged at a predetermined interval and may cause at least some of the multiple key buttons (e.g., the key buttons 235 in FIG. 1) disposed on the plate (e.g., the plate 230 in FIG. 2) to be exposed to at least a portion of the first surface 210a.In an embodiment, the front surface cover 210 may include multiple fixing grooves 215, each of which is provided between adjacent ones of the multiple openings OP, on the second surface 210b.In an embodiment, the multiple fixing grooves 215 may be formed together when forming the front surface cover 210, or may be formed on the front surface cover 210 through post-processing.

According to various embodiments, the multiple pin members 211 may be fixed to the multiple fixing grooves 215.In this case, the multiple pin members 211 may be fixed to protrude from the second surface 210b by a predetermined height.In an embodiment, each of the multiple pin members 211 may include a post 2111 (e.g., a shaft portion) having a predetermined length, and a head 2112 provided at an end of the post 2111 to have a larger diameter than the post 2111.In an embodiment, the wire member (e.g., the wire member 240 in FIG. 2) disposed to support the multiple pin members 211 may be prevented from being separated from the posts 2111 by the heads 2112.In an embodiment, each of the multiple pin members 211 may further include a bearing member 2113 disposed to surround at least a portion of the post 2111.In an embodiment, the bearing member 2113 may be rotatably disposed relative to the post 2111.In an embodiment, the bearing member 2113 may be replaced with a metal ring longitudinally cut and rotatably disposed to surround the post.In an embodiment, (a) of FIG. 3C is a view illustrating a state in which the bearing member 2113 is mounted on the pin member 211, (b) of FIG. 3C is a view illustrating a state in which the pin member 211 having the bearing member 2113 mounted thereon is mounted in a fixing groove 215 of the front surface cover 210, and (c) of FIG. 3C is a view illustrating a state in which the pin member 211 having the bearing member 2113 mounted thereon is fixed to the fixing groove 215 of the front surface cover 210.

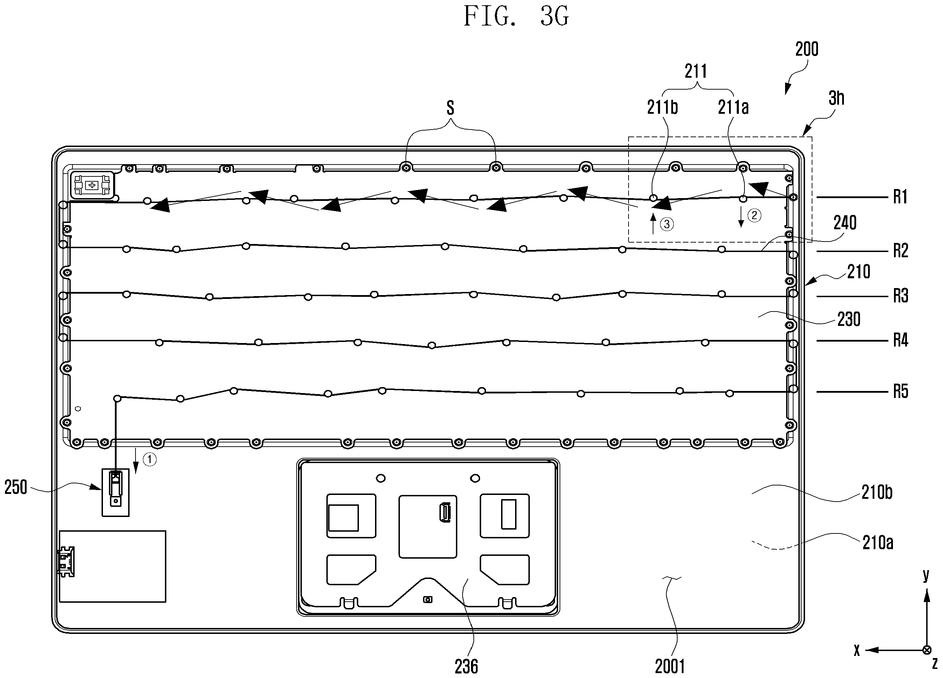

According to various embodiments, when the wire member (e.g., the wire member 240 in FIG. 2) is disposed to support the multiple pin members 211, the wire member (e.g., the wire member 240 in FIG. 2) may be disposed to be in contact with at least a portion of the bearing member 2113.In an embodiment, the multiple pin members 211 may be fixed by being press-fitted into the fixing grooves 215 formed at a predetermined depth on the second surface 210b of the front surface cover 210 using a press jig.In an embodiment, the multiple pin members 211 may be arranged at intervals of about 30 mm to 35 mm (preferably, 32.5 mm) along the row direction of openings OP (e.g., the first to fifth rows R1 to R5 in FIG. 3G) to prevent the plate 230 from being permanently deformed or sagging when the key buttons (e.g., the key buttons 235 in FIG. 1) are hit.

In some embodiments, the multiple pin members 211 may be provided in a screw type in which the pin members 211 are partially threaded so as to be fastened to screw grooves formed at a predetermined depth on the second surface 210b of the front surface cover 210.In some embodiments, the pin members 211 may be formed integrally with the front surface cover 210.

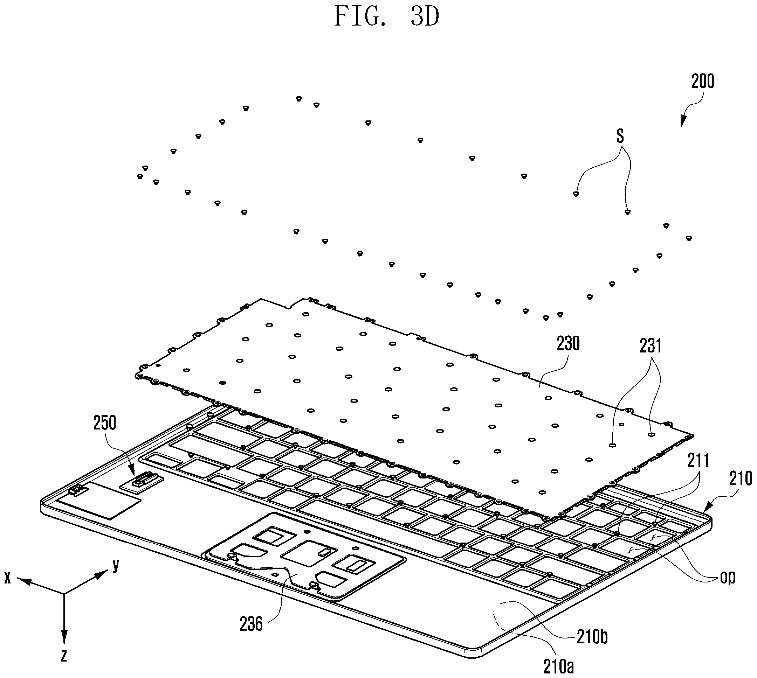

FIGS. 3D to 3F are views each illustrating a state in which a plate is fixed to a housing according to various embodiments of the disclosure.

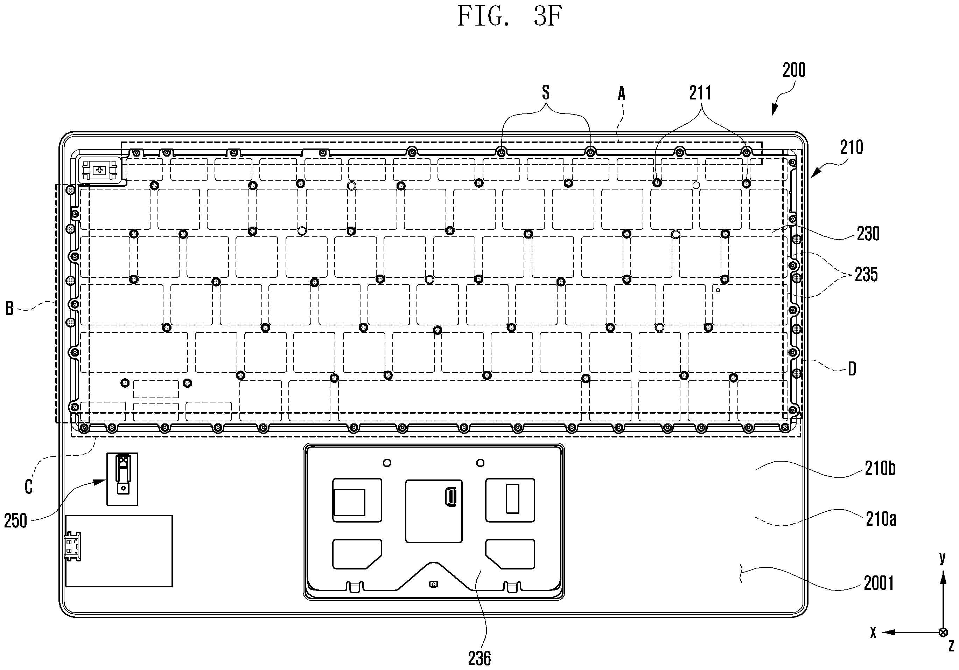

Referring to FIGS. 3D to 3F, the electronic device 200 may include a plate 230 mounted on the front surface cover 210 in the state in which the multiple pin members 211 are fixed.In an embodiment, the plate 230 may include multiple through holes 231.In an embodiment, when the plate 230 is mounted on the second surface 210b of the front surface cover 210, the multiple pin members 211 disposed to protrude from the second surface 210b may pass through the multiple through holes 231 in the plate 230 and then protrude from the surface of the plate 230.In an embodiment, the plate 230 may be fixed to the second surface 210b of the front surface cover 210 by multiple fastening members S (e.g., screws) disposed along the edge thereof.For example, the plate 230 may be fixed along areas A, B, C, and D areas in FIG. 3F, which are edge areas (e.g., peripheral areas) of the plate 230 by the multiple fastening members S.

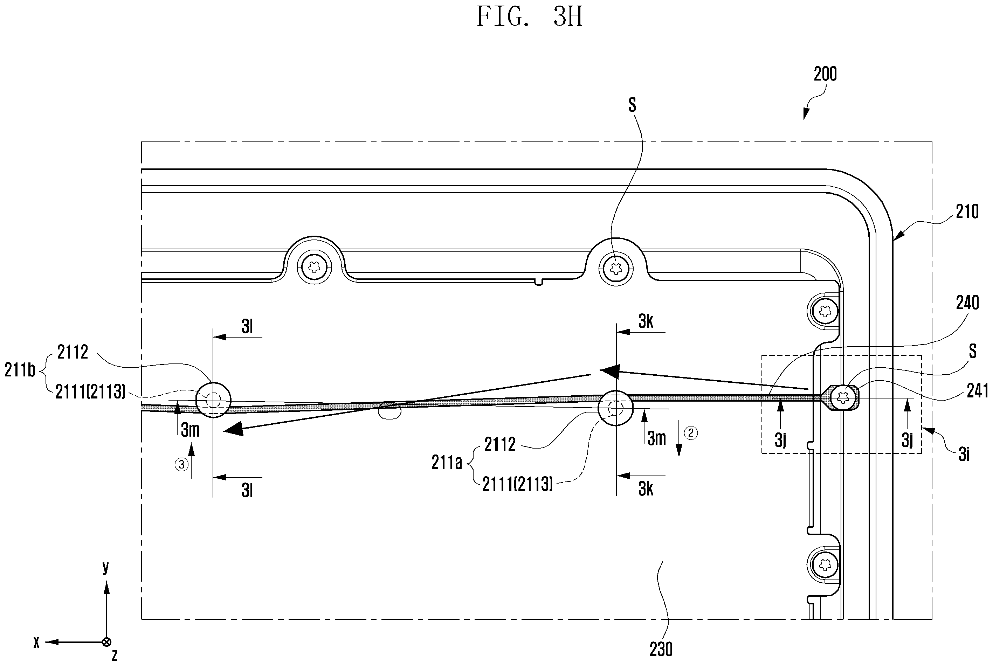

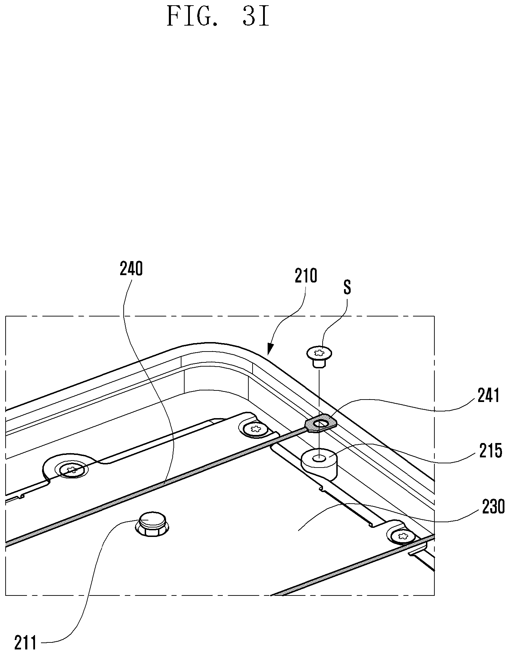

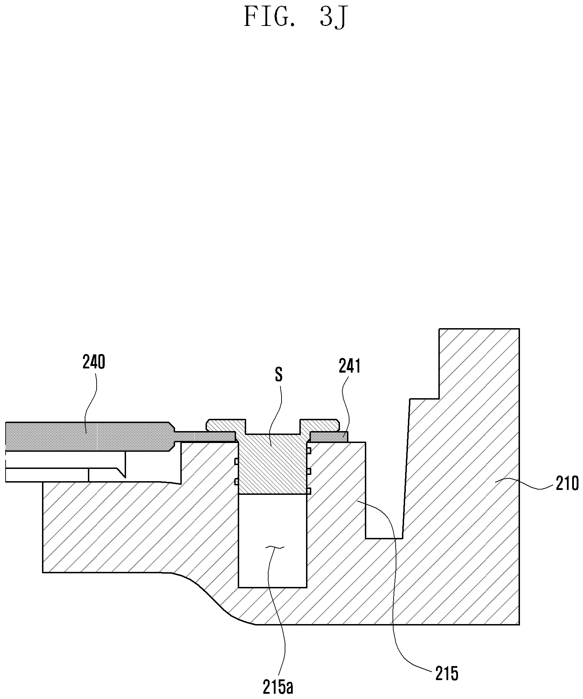

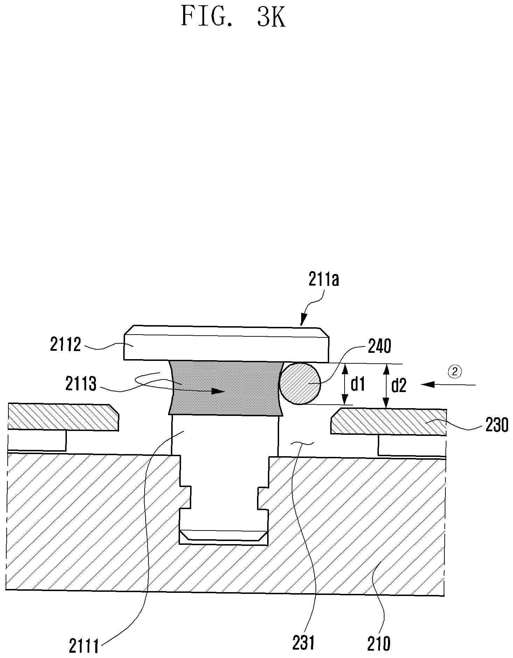

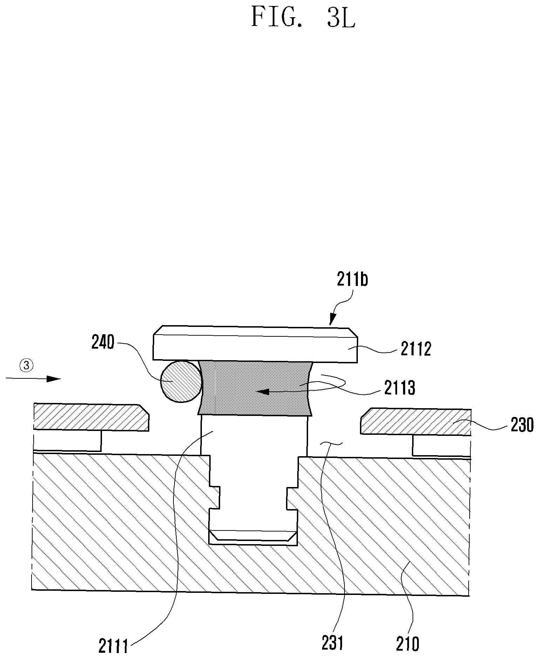

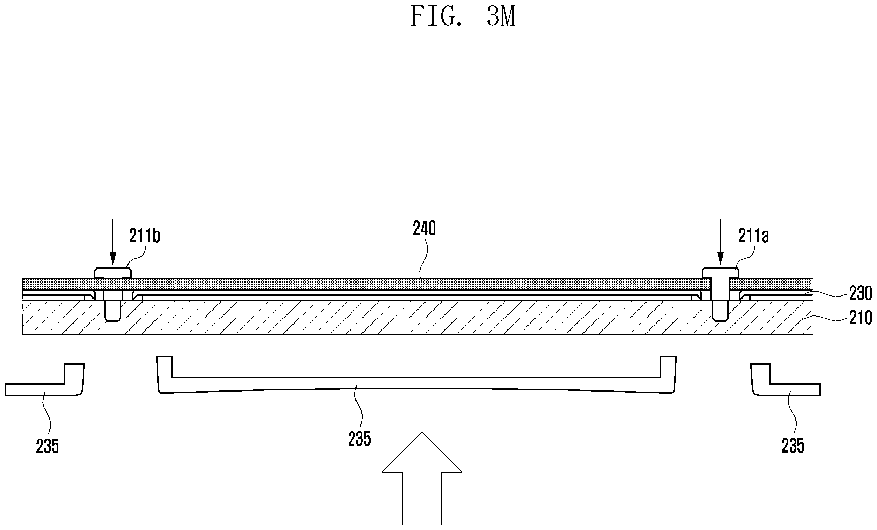

FIG. 3G is a view illustrating a state in which a wire member is applied to a plate according to various embodiments of the disclosure.FIG. 3H is an enlarged view illustrating the area 3h of FIG. 3G according to various embodiments of the disclosure.FIG. 3I is a view illustrating a state in which one end of a wire member is fixed in the area 3i of FIG. 3H according to various embodiments of the disclosure.FIG. 3J is a partial cross-sectional view of the electronic device according to various embodiments of the disclosure taken along line 3j-3j in FIG. 3H. FIG. 3K is a partial cross-sectional view of the electronic device according to various embodiments of the disclosure taken along line 3k-3k in FIG. 3H. FIG. 3L is a partial cross-sectional view of the electronic device according to various embodiments of the disclosure taken along line 3I-3I in FIG. 3H. FIG. 3M is a partial cross-sectional view of an electronic device viewed along line 3m-3m of FIG. 3H according to various embodiments of the disclosure.

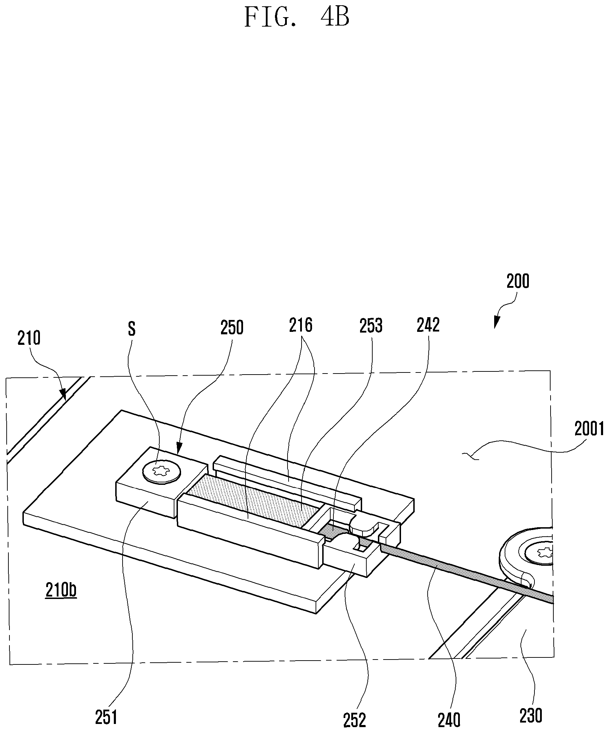

Referring to FIGS. 3G to 3H, the electronic device 200 may include a wire member 240 disposed to support multiple pin members 211 protruding from the surface of the plate 230 mounted on the second surface 210b of the front surface cover 210.In an embodiment, one end 241 of the wire member 240 may be fixed to a fixing groove 215a formed in the second surface 210b of the front surface cover 210 by a fastening member S, and the other end (e.g., the other end 242 in FIG. 4B) may be pulled in a first direction (e.g., in direction ① FIG. 3G) by the tension maintaining structure 250, thereby supporting the multiple pin members 211 while maintaining tight tension.

According to various embodiments, the multiple pin members 211 may be arranged along the rows R1, R2, R3, R4, and R5 in the horizontal direction (e.g., the x-axis direction) to correspond to the arrangement of the key buttons (e.g., the key buttons 235 in FIG. 1).In an embodiment, the multiple pin members 211 may be arranged along a first row R1, a second row R2 arranged in parallel with the first row R1, a third row R3 arranged in parallel with the second row R2, a fourth row R4 arranged in parallel with the third row R3, and a fifth row R5 arranged in parallel with the fourth row R4.In an embodiment, the number of rows R1, R2, R3, R4, and R5 is not limited, and may be changed in various ways depending on the arrangement order of key buttons (e.g., the key buttons 235 in FIG. 1) applied to the electronic device 200.

According to various embodiments, the wire member 240 may be disposed to support the multiple pin members 211 along the first row R1, and then support the multiple pin members 211 in the order of the second row R2, the third row R3, the fourth row R4, and the fifth row R5.In an embodiment, the wire member 240 may maintain tighter tension, and separation of the wire member due to an external impact may be reduced when the wire member 240 is disposed such that a pressing direction for supporting a first pin member 211a among the multiple pin members 211 and a direction for pressing a second pin member 211b adjacent to the first pin member 211a are opposite to each other.

For example, as illustrated in FIGS. 3H, 3K, and 3L, the wire member 240 may be disposed to press the post 2111 of the first pin member 211a in a second direction (e.g., direction ② in FIG. 3H) on one side of the first pin member 211a among the multiple pin members 211.In this case, the wire member 240 may be prevented from being separated by the head 2112 of the first pin member 211a.In an embodiment, the wire member 240 may be disposed to press the post 2111 of the second pin member 211b in a third direction (e.g., direction ③ in FIG. 3H), which is opposite to the second direction (e.g., direction ②), on the other side of the second pin 211b adjacent to the first pin member 211a.In this case, the wire member 240 may be prevented from being separated by the head 2112 of the second pin member 211b.In an embodiment, the wire members 240 may be disposed sequentially along respective rows R1, R2, R3, R4, and R5 to press adjacent pin members 211 in opposite directions in the manner described above, and may finally be fixed to the tension maintaining structure 250.In an embodiment, since the wire member 240 is disposed to support the bearing member 2113 rotatably coupled to the post 2111 of each pin member 211, the wire member 240 may be smoothly pulled in the first direction (e.g., direction ①) by the tension maintaining structure 250, thereby maintaining tight tension.For example, when the wire member 240 supporting the first pin member 211a is pulled by the tension maintaining structure 250, the bearing member 2113 may rotate counterclockwise. In an embodiment, when the wire member 240 supporting the second pin member 211b is pulled by the tension maintaining structure 250, the bearing member 2113 may rotate clockwise.In an embodiment, the wire member 240 may be disposed to at least partially press the multiple pin members 211, and in a state in which tight tension is maintained by the tension maintaining structure 250, the wire member 240 may support the plate 230 while being in contact with the surface of the plate 230.

In an embodiment, the difference between the diameter d1 of the wire member 240 and the distance d2 between the head (e.g., the head 2112) of the pin member (e.g., the first pin member 211a) and the plate 230 may be 0.5 mm or less. For example, the wire member 240 may be disposed to maintain the distance d2 between the head (e.g., the head 2112) of the pin member (e.g., the first pin member 211a) and the plate 230.In some embodiments, the diameter d1 of the wire member 240 may be substantially equal to the distance d2 between the head (e.g., the head 2112) of the pin member (e.g., the first pin member 211a) and the plate 230.

Referring to FIG. 3M, while the support structure of the plate 230 based on fastening members such as conventional screws disposed around the key buttons 235 may not be provided with a separate support structure between the fastening members, the support structure of the plate 203 based on the wire member 240 according to an exemplary embodiment of the disclosure supports the plate 230 seamlessly from the first pin member 211a to the adjacent second pin member 211b, which may help reduce permanent deformation of the plate 230 and/or the front surface cover 210 caused by hitting the key buttons 235.

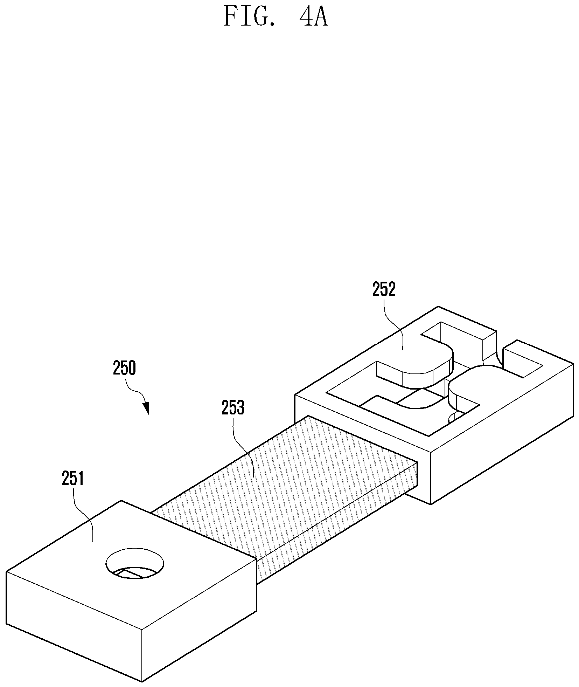

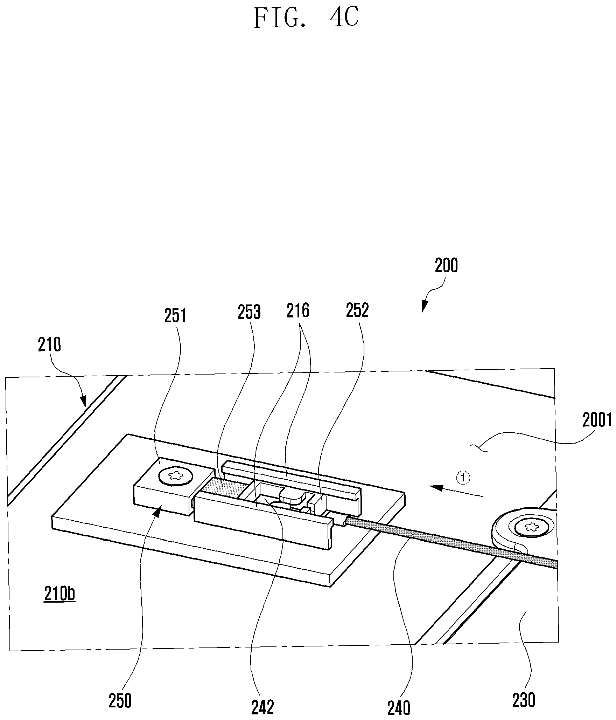

FIG. 4A is a perspective view of a tension maintaining structure according to various embodiments of the disclosure. FIGS. 4B and 4C are views each illustrating a state in which the other end of a wire member is elastically coupled by the tension maintaining structure according to various embodiments of the disclosure.

Referring to FIGS. 4A to 4C, the tension maintaining structure 250 may be disposed on a second surface 210b of a front surface cover 210.In an embodiment, the tension maintaining structure 250 may be disposed to provide tension that tightly pulls the other end 242 of the wire member 240 disposed to support multiple pin members 211.In an embodiment, the tension maintaining structure 250 may include a fixing member 251 fixed to the second surface 210b of the front surface cover 210, a slide member slidably coupled to the fixing member 251 and fixing the other end 242 of the wire member 240, and an elastic member 253 elastically interconnecting the fixing member 251 and the slide member 252.In an embodiment, the slide member 252 may be disposed on the second surface 210b of the front surface cover 210, or may be disposed to be capable of reciprocating along a guide rail 216 formed integrally with the second surface 210b.In an embodiment, the elastic member 253 may include a rubber band.

According to various embodiments, the other end 242 of the wire member 240 may be fixed to the slide member 252 in a state in which the elastic member 253 of the tension maintaining structure 250 is stretched via the fixing member 251 and the slide member 252.In this case, the wire member 240 may maintain a state in which tension is provided to pull the wire member toward the fixing member 251 (e.g., in direction ①) by the restoring force of the elastic member 253 that pulls the slide member 252 with respect to the fixing member 251.Accordingly, the wire member 240 may tightly support the multiple pin members 211 by the tension maintaining structure 250.In some embodiments, the electronic device 200 may include a pair of tension maintaining structures 250 disposed at opposite ends of the wire member 240 to provide tension in opposite directions.

According to various embodiments, the tension maintaining structures 250 may be disposed on the plate 230.For example, the fixing member 251 may be fixed to the plate 230.For example, the fixing member 251 may be fixed to a pin member (e.g., the first pin member 211a).

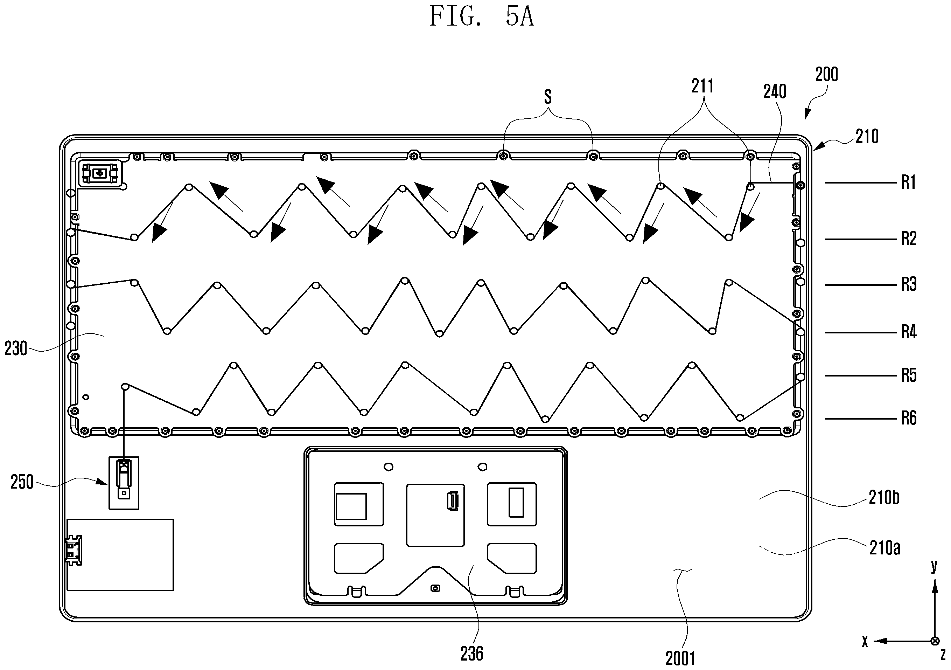

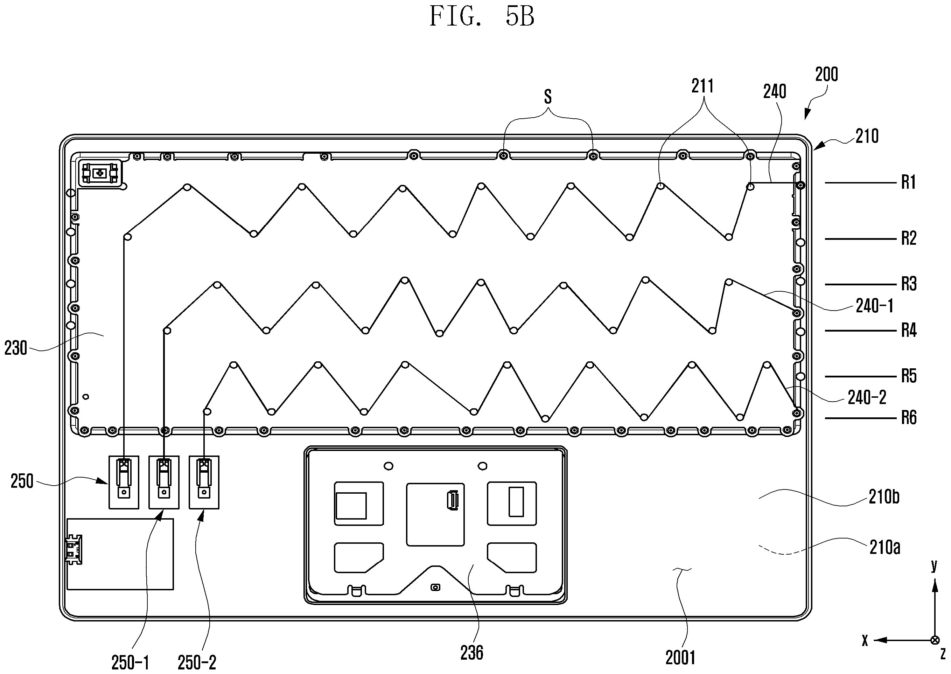

FIGS. 5A and 5B are views each illustrating an arrangement structure of wire members according to various embodiments of the disclosure.

In describing the electronic device of FIGS. 5A and 5B, components that are substantially the same as those of the electronic device of FIG. 3G are assigned with the same reference numerals, and a detailed description thereof may be omitted.

Referring to FIG. 5A, the wire member 240 may be disposed to be at least partially coiled (e.g., wound around multiple pin members 211, while alternating between two rows at a time.In an embodiment, the wire member 240 may be disposed to support all of the multiple pin members by supporting the pin members 211 of the first row R1, then supporting the pin members 211 of the second row R2, and then supporting again the pin members 211 in the first row R1 (e.g., in a zigzag support manner).For example, the wire member 240 may be disposed to support the pin members 211 of the first row R1 by being around counterclockwise, and then support the pin members 211 of the second row R2 by being wound clockwise.In this way, the wire member 240 may alternately support the multiple pin members 211 located along the first row R1 and second row R2, then alternately support the multiple pin members 211 located along the third row R3 and fourth row R4, then alternately support the multiple pin members 211 located along the remaining fifth row R5 and sixth row R6, and then be connected to the tension maintaining structure 250.In some embodiments, the wire members 240 may be disposed to alternately support multiple pin members 211 by alternating along three or more rows (e.g., R1, R2, and R3).In some embodiments, the wire member 240 may be disposed to sequentially support the multiple pin members 211 along at least one column direction (e.g., the y-axis direction), corresponding to the arrangement structure of key buttons (e.g., key buttons 235 in FIG. 1).

Referring to FIG. 5B, the plate may be configured to be supported by multiple wire members supporting multiple pin members and multiple tension maintaining structures.In an embodiment, the plate may be supported by a first wire 240 having one end fixed to the second surface 210b of the front surface cover 210 and the other end connected to a first tension maintaining structure 250 disposed on the second surface 210b of the front surface cover 210.In an embodiment, the first wire member 240 may be disposed to support the multiple pin members 211 disposed along the first row R1 and second row R2 among the multiple pin members 211.In an embodiment, the plate may be supported by a second wire 240-1 having one end fixed to the second surface 210b of the front surface cover 210 and the other end connected to a second tension maintaining structure 250-1 disposed on the second surface 210b of the front surface cover 210.In an embodiment, the second wire member 240-1 may be disposed to support the multiple pin members 211 disposed along the third row R3 and fourth row R4 among the multiple pin members 211.In an embodiment, the plate may be supported by a third wire 240-2 having one end fixed to the second surface 210b of the front surface cover 210 and the other end connected to a third tension maintaining structure 250-2 disposed on the second surface 210b of the front surface cover 210.In an embodiment, the third wire member 240-2 may be disposed to support the multiple pin members 211 disposed along the fifth row R5 and sixth row R6 among the multiple pin members 211.In some embodiments, the tension maintaining structures and wire members may be disposed in two pairs or four pairs or more depending on the arrangement of the multiple pin members 211 arranged along the arrangement of the multiple key buttons (e.g., the key buttons 235 in FIG. 1).

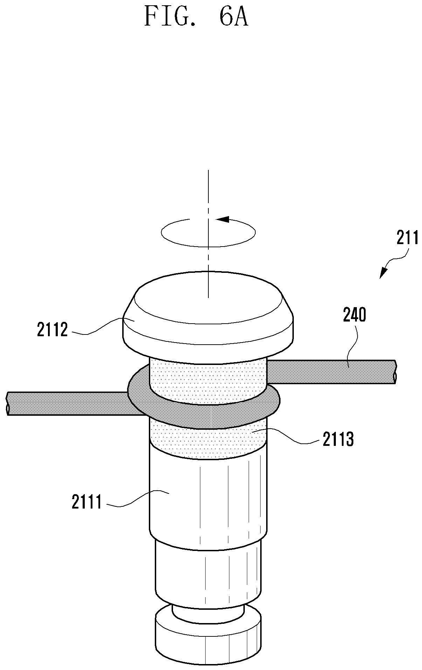

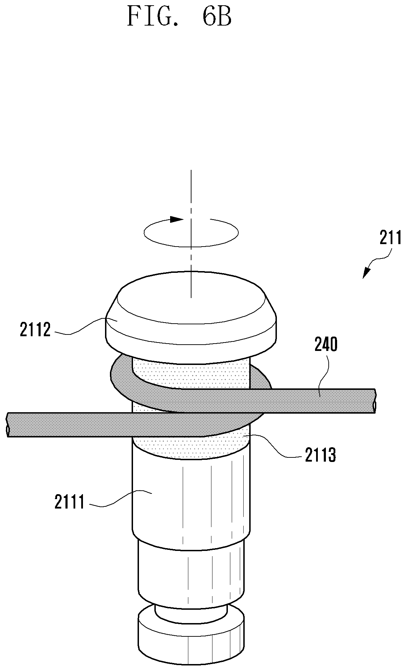

FIGS. 6A and 6B are views each illustrating a pin member support structure based on a wire member according to various embodiments of the disclosure.

As shown in FIGS. 6A and 6B, the wire member 240 may be disposed to be wound around the bearing member 2113 of the pin member 211 in one turn.In an embodiment, the wire member 240 may be disposed to be wound around the bearing member 2113 of the pin member 211 counterclockwise, as shown in FIG. 6A. In an embodiment, the wire member 240 may be disposed to be wound around the bearing member 2113 of the pin member 211 clockwise.In some embodiments, the wire member 240 may be disposed to be wound around the bearing member 2113 of the pin member 211 in two or more turns.

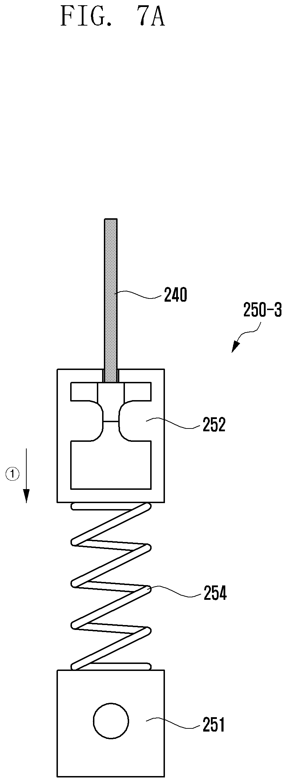

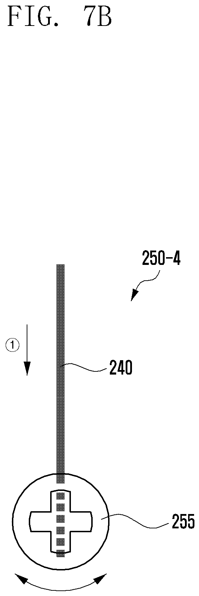

FIGS. 7A and 7B are views each illustrating a tension maintaining structure according to various embodiments of the disclosure.

Referring to FIG. 7A, a tension maintaining structure 250-3 may include a fixing member 251 fixed to a second surface (e.g., the second surface 210b in FIG. 2) of a front surface cover (e.g., the front surface cover 210 in FIG. 2), a slide member 252 spaced apart from the fixing member 251, and disposed to be slidable on the second surface (e.g., the second surface 210b in FIG. 2), in which the wire member 240 is fixed to the slide member, and an elastic member 254 elastically interconnecting the fixing member 251 and the slide member 252.In an embodiment, the elastic member 254 may include a coil spring.In an embodiment, the wire member 240 may be provided with tension that pulls the slide member 252 toward the fixing member (e.g., in direction ①) with respect to the fixing member 251.In some embodiments, the electronic device 200 may include a pair of tension maintaining structures 250-3 disposed at opposite ends of the wire member 240 to provide tension in opposite directions.

Referring to FIG. 7B, a tension maintaining structure 250-4 may include a rotation member 255 that provides tension by directly winding the wire member.In an embodiment, the rotation member 255 may include a screw rotatably coupled to a second surface (e.g., the second surface 210b in FIG. 2A) of a front surface cover (e.g., the front surface cover 210 in FIG. 2).In this case, the magnitude of the tension of the wire member 240 pulled toward the rotation member (e.g., in direction ①) may be determined depending on the degree of rotation of the rotation member.In some embodiments, the electronic device 200 may include a pair of rotation members 255 disposed at opposite ends of the wire member 240 to provide tension in opposite directions.

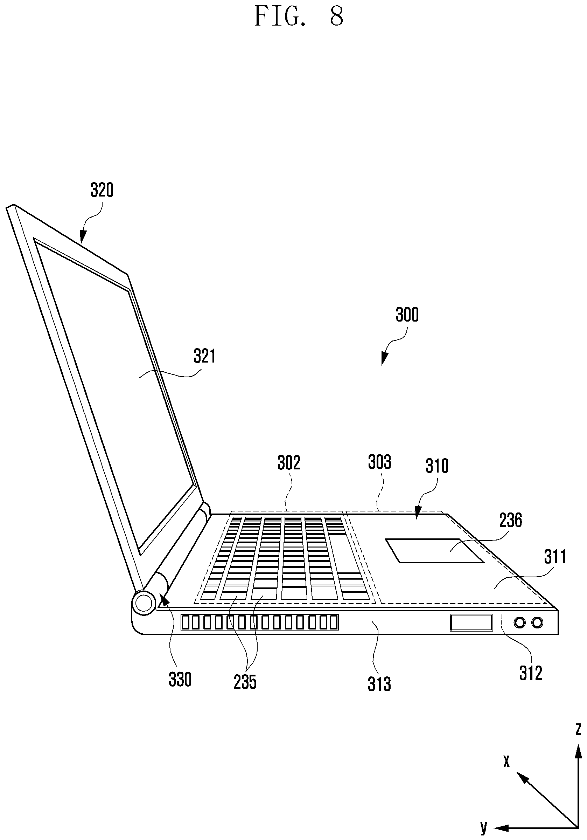

FIG. 8 is a perspective view of an electronic device including multiple key buttons according to various embodiments of the disclosure.

Referring to FIG. 8, the electronic device 300 may include a first housing 310 and a second housing 320 that is rotatably connected to the first housing 310 via a hinge device 330.In an embodiment, the first housing 310 may include a front surface cover 311, a rear surface cover 312 oriented in an opposite direction to the front surface cover 311, and a side surface member surrounding a space between the front surface cover 311 and the rear surface cover 312.In an embodiment, the first housing 310 may include multiple key buttons disposed in a first area 302 (e.g., a button placement area) of the housing 310 to be at least partially exposed to the outside through the front surface cover 311, and at least one key pad 236 disposed in a second area 303 (e.g., a key pad placement area) adjacent to the first area 302 to be at least partially exposed to the outside through the front surface cover 311.In an embodiment, the second housing 320 may include a display 321 disposed in the inner space thereof to be at least partially visible from the outside.In an embodiment, the electronic device 300 may include a support structure substantially the same as various support structures of the plate 230 based on the wire members 240 according to example embodiments of the disclosure illustrated in FIGS. 2 to 7B.

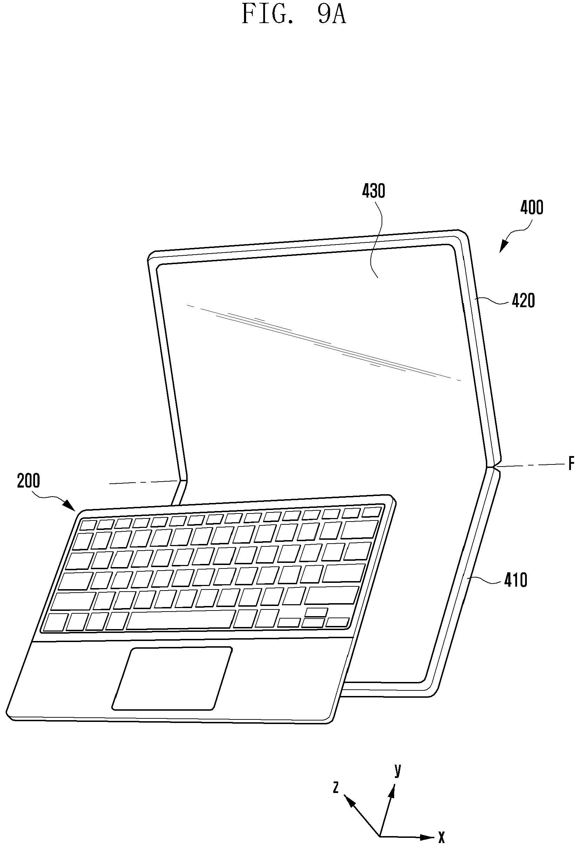

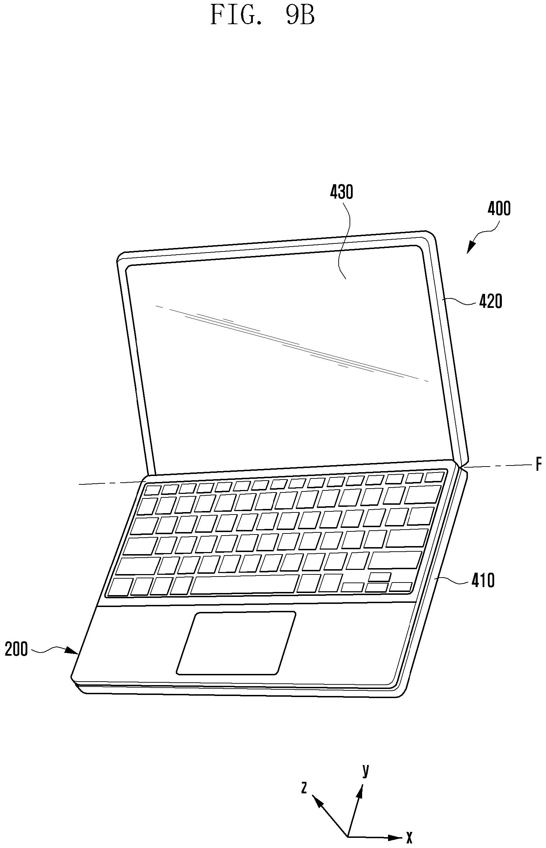

FIGS. 9A and 9B are views each illustrating an arrangement relationship between an electronic device and an external electronic device according to various embodiments of the disclosure.

Referring to FIGS. 9A and 9B, an electronic device 200 (e.g., the electronic device 200 in FIG. 1) may be operated to interwork with an external electronic device 400.For example, the electronic device 200 may be operatively connected to the external electronic device 400 through wired communication (e.g., connector connection) and/or wireless communication (e.g., Bluetooth communication) to be used as input means.

According to various embodiments, the external electronic device 400 may include a foldable electronic device including a first housing 410, a second hinge housing 420 rotatably connected to the first housing 410 via a hinge module (e.g., a hinge structure, a hinge device, or a hinge assembly), and a flexible display 430 disposed to be supported by the first housing 410 and the second housing 420.In an embodiment, the external electronic device 400 may operate in a mode where, in the folded state, at least some portions of the flexible display 430 face each other, making the flexible display invisible from the outside (e.g., in-folding mode), or in a mode where, in the folded state, at least some portions of the flexible display 430 are oriented in opposite directions, making the flexible display visible from the outside (e.g., out-folding mode).

According to various embodiments, the electronic device 200 may be operatively connected to the external electronic device 400 simply by placing the electronic device on at least a portion (e.g., at least a portion of the first housing 410) when the external electronic device 400 is in the unfolded state (e.g., in a partially unfolded or fully unfolded state).In some embodiments, the electronic device 200 may be operatively connected to the external electronic device 400 by being close to the external electronic device 400 or through a separate connection operation even if not close to the external electronic device 400.

According to various embodiments, an electronic device may include a housing (e.g., the housing 201 in FIG. 1) including multiple protruding pin members (e.g., the pin members 211 in FIG. 2), a plate (e.g., the plate 230 in FIG. 2) coupled to the housing and including multiple through holes (e.g., the through holes 231 in FIG. 2) through which the multiple pin members pass, respectively, and a wire member (e.g., the wire member 240 in FIG. 2) disposed to support at least a portion of each of the multiple pin members protruding from the through holes. The plate may be supported by the wire member. In this way, the support structure is advantageously simplified by reducing the number of components, which in turn reduces the assembly time andcostsduringmanufacturing and/or disassembly and repair time during maintenance.

According to various embodiments, the housing may include multiple openings (e.g., the openings OP in FIG. 2) provided at a predetermined interval; and multiple key buttons (e.g., the key buttons 235 in FIG. 1) disposed between the plate and the housing to be at least partially exposed outside the electronic device through the openings. By means of the uniform support force provided via the simplified support structure according to the disclosure, the adjacent key buttons may be seamlessly supported, thereby improving the operational reliability of the electronic device.

According to various embodiments, each of the multiple pin members may be disposed between adjacent ones of the multiple openings.

According to various embodiments, the wire member may be disposed to press a first pin member (e.g., the first pin member 211a in FIG. 3G) among the multiple pin members in a first direction, and to press a second pin member (e.g., the second pin member 211b in FIG. 3G) adjacent to the first pin member in a second direction different from the first direction.

According to various embodiments, the wire member may be disposed to be wound around each of at least some multiple pin members at least once among the multiple pin members.

According to various embodiments, the direction where the wire member is wound around the first pin member among the multiple pin members is opposite to the direction where the wire member is wound around the second pin member adjacent to the first pin member.

According to various embodiments, the pin members may each include a post (e.g., the post 2111 in FIG. 3C) fixed to the housing, and a head (e.g., the head 2112 in FIG. 3C) provided at an end of the post to have a larger diameter than the post.The wire member may be in contact with the outer peripheral surface of the post and may be supported by the head to be prevented from being separated.

According to various embodiments, the electronic device may further include a bearing member (e.g., the bearing member 2113 in FIG. 3C) rotatably coupled to the post and in contact with the wire member.

According to various embodiments, the wire member may be made of at least one of a metal material, a carbon material, a nylon material, a fiber material, or a heat-resistant fabric material.

According to various embodiments, the electronic device may further include a tension maintaining structure (e.g., the tension maintaining structure 250 in FIG. 4B) elastically connected to at least one of one end (e.g., the one end 241 in FIG. 3H) and/or the other end (e.g., the other end 242 in FIG. 4B) of the wire member and disposed in the housing.

According to various embodiments, the tension maintaining structure may include a fixing member (e.g., the fixing member 251 in FIG. 4B) fixed to the housing, a slide member (e.g., the slide member 252 in FIG. 4B) slidably coupled to the housing and having one end to which the wire member is fixed; and an elastic member (e.g., the elastic member 253 in FIG. 4B) interconnecting the fixing member and the other end of the slide member, the elastic member being configured to provide a pressing force to pull the slide member toward the fixing member.

According to various embodiments, the plate may be fixed to the housing by multiple fastening members (e.g., the fastening members S in FIG. 2) fastened along an edge of the plate.

According to various embodiments, the electronic device may include a first housing (e.g., the first housing 310 in FIG. 8) and a second housing (e.g., the second housing 320 in FIG. 8) rotatably coupled to the first housing via at least one hinge device (e.g., the hinge device 330 in FIG. 8), and the housing may include the first housing.

According to various embodiments, the electronic device may further include a display disposed in an inner space of the second housing to be visible from the outside.

According to various embodiments, the housing (e.g., the housing 201 in FIG. 1) may include a front surface cover (e.g., the front surface cover 210 in FIG. 2) and a rear surface cover (e.g., the rear surface cover 220 in FIG. 2) coupled to the front surface cover, the plate may be disposed in a space (e.g., the inner space 2001 in FIG. 2) between the front surface cover and the rear surface cover, and the multiple pin members protrude from the front surface cover toward the plate.

According to various embodiments, the wire member may be disposed between the plate and the rear cover to be in contact with the plate.

According to various embodiments, the wire member may be disposed to support the protruding portions of the multiple pin members protruding from the plate.

According to various embodiments, the electronic device may further include a rotation member (e.g., the rotation member 255 in FIG. 7B) rotatably disposed in the housing, in which one of the one end or the other end of the wire member may be connected to the rotation member by winding.

According to various embodiments, the magnitude of the tension of the wire member may be determined depending on the rotation of the at least one rotation member.

According to various embodiments, the at least one rotation member is rotatably coupled to the housing and may include a screw that winds an end of the wire member.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. Therefore, the scope of various embodiments of the disclosure should be construed to include, in addition to the embodiments set forth herein, all changes and modifications derived based on the technical idea of various embodiments of the disclosure.

## Claims

1. An electronic device (200) comprising:
a housing (201) comprising multiple pin members (211);
a plate (230) coupled to the housing (201) and comprising multiple through holes (231) through which the multiple pin members (211) pass, respectively; and
a wire member (240) disposed to support at least a portion of each of the multiple pin members (211) protruding from the through holes (231),
wherein the plate (230) is supported by the wire member (240).

2. The electronic device (200) of claim 1, wherein the housing (201) comprises:
multiple openings (OP) provided at a predetermined interval; and
multiple key buttons (235) disposed between the plate (230) and the housing (201) to be at least partially exposed outside the electronic device (200) through the openings (OP).

3. The electronic device (200) of claim 2, wherein each of the multiple pin members (211) is disposed between adjacent ones of the multiple openings (OP).

4. The electronic device (200) of one of claims 1 to 3, wherein the wire member (240) is disposed to press a first pin member (211a) among the multiple pin members (211) in a first direction, and to press a second pin member (211b) adjacent to the first pin member (211a) in a second direction different from the first direction.

5. The electronic device (200) of one of claims 1 to 4, wherein the wire member (240) is disposed to be wound around each of at least some multiple pin members (211) at least once among the multiple pin members (211).

6. The electronic device (200) of claim 5, wherein a direction where the wire member (240) is wound around a first pin member (211a) among the multiple pin members (211) is opposite to a direction where the wire member (240) is wound around a second pin member (211b) adjacent to the first pin member (211a).

7. The electronic device (200) of one of claims 1 to 6, wherein the pin members (211) each comprise:
a post (2111) fixed to the housing (201); and
a head (2112) provided at an end of the post (2111) to have a larger diameter than the post (2111), and
wherein the wire member (240) is in contact with an outer peripheral surface of the post (2111) and is supported by the head (2112) to be prevented from being separated.

8. The electronic device (200) of claim 7, further comprising:
a bearing member (2113) rotatably coupled to the post (2111) and in contact with the wire member (240).

9. The electronic device (200) of one of claims 1 to 8, wherein the wire member (240) is made of at least one of a metal material, a carbon material, a nylon material, a fiber material, or a heat-resistant fabric material.

10. The electronic device (200) of one of claims 1 to 9, further comprising:
a tension maintaining structure (250) elastically connected to at least one of one end (241) and/or another end (242) of the wire member (240) and disposed in the housing (201).

11. The electronic device (200) of claim 10, wherein the tension maintaining structure (250) comprises:
a fixing member (251) fixed to the housing (201);
a slide member (252) slidably coupled to the housing (201) and having one end (241) to which the wire member (240) is fixed; and
an elastic member (253) interconnecting the fixing member (251) and another end of the slide member (252), the elastic member (253) being configured to provide a pressing force to pull the slide member (252) toward the fixing member (251).

12. The electronic device (200) of one of claims 1 to 11, wherein the plate (230) is fixed to the housing (201) by multiple fastening members (S) fastened along an edge of the plate (230).

13. The electronic device (200) of one of claims 1 to 12, wherein the electronic device (200) comprises a first housing (310) and a second housing (320) rotatably coupled to the first housing (310) via at least one hinge device (330), and
wherein the housing (201) comprises the first housing (310).

14. The electronic device (200) of claim 13, further comprising:
a display (321) disposed in an inner space of the second housing (320) to be visible from the outside.

15. The electronic device (200) of one of claims 1 to 14, wherein the housing (201) comprises a front surface cover (210) and a rear surface cover (220) coupled to the front surface cover (210),
wherein the plate (230) is disposed in a space (2001) between the front surface cover (210) and the rear surface cover (220), and
wherein the multiple pin members (211) protrude from the front surface cover (210) toward the plate (230).
